(19) Europäisches Patentamt
European Patent Office
Office européen des brevets

(11) **EP 4 106 131 A1**

(12) **EUROPÄISCHE PATENTANMELDUNG**

(43) Veröffentlichungstag:
**21.12.2022 Patentblatt 2022/51**

(21) Anmeldenummer: **21179287.4**

(22) Anmeldetag: **14.06.2021**

(51) Internationale Patentklassifikation (IPC):
**H02J 3/38** *(2006.01)* **G06N 3/02** *(2006.01)*

(52) Gemeinsame Patentklassifikation (CPC):
**H02J 3/38; G06N 3/02**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Duckheim, Mathias**
**91052 Erlangen (DE)**
• **Metzger, Michael**
**85570 Markt Schwaben (DE)**

(54) **STEUERUNG EINES VERSORGUNGSNETZES, INSBESONDERE EINES STROMNETZES**

(57) Es wird ein Verfahren zum bestärkten Lernen eines künstlichen neuronalen Netzes vorgeschlagen, wobei das neuronale Netz aus mit einem Versorgungsnetz, insbesondere mit einem Stromnetz, assoziierten Messwerten mehrere Steuerungswerte zur Steuerung des Versorgungsnetzes ermittelt. Das Verfahren ist gekennzeichnet durch die folgenden Schritte:
- (S1) Ermitteln eines Steuerungswertes derart, dass wenigstens ein Grenzwert einer Messgröße des Versorgungsnetzes in einem Zeitbereich verletzt wird, wobei der Zeitbereich derart festgelegt wird, dass Schutzvorrichtungen des Versorgungsnetzes nicht auslösen;
- (S2) Erfassen wenigstens eines mit dem Steuerungswert assoziierten Messwertes; und
- (S3) Trainieren des neuronalen Netzes mittels des berechneten Steuerungswertes und des erfassten zugehörigen Messwertes.
Weiterhin betrifft die Erfindung ein künstliches neuronales Netz zur Steuerung eines Versorgungsnetzes sowie eine Steuervorrichtung, die ein solches neuronales Netz umfasst.

EP 4 106 131 A1

**Beschreibung**

Die Erfindung betrifft ein Verfahren gemäß dem Oberbegriff des Patentanspruches 1, ein künstliches neuronales Netz gemäß dem Oberbegriff des Patentanspruches 14 sowie eine Steuervorrichtung zur Steuerung eines Versorgungsnetzes gemäß dem Oberbegriff des Patentanspruches 15.

Versorgungsnetze, insbesondere Verteilnetze der Niederspannung und Mittelspannung, müssen Versorgungsaufgaben unter neuen Verbrauchs- und Erzeugungsszenarien lösen. Der Zubau von Photovoltaik, Batteriespeichern und Ladegeräten für Elektrofahrzeuge führt zu größeren Belastungen im elektrischen Netz (Stromnetz).

Neben einem aufwendigen Netzausbau sind Betriebsansätze attraktiv, welche die genannten Verbraucher in kritischen Netzsituationen gezielt steuern, um Überlastungen, beispielsweise Verletzungen des Spannungsbandes oder ein Auslösen einer Sicherung durch Überschreiten ihrer Maximalleistung (Grenzwert), zu vermeiden. Diese Ansätze können umso effizienter ermöglicht werden, je genauer der Zustand des Versorgungsnetzes bekannt ist.

Niederspannungsnetze oder Mittelspannungsnetze weisen im Gegensatz zu Übertragungsnetzen kaum eine Messinfrastruktur auf. Außerdem gibt es weniger Steuerfreiheitsgrade, wie beispielsweise die Abschaltung von Ladegeräten oder das Abregeln von Photovoltaikanlagen oder Wärmepumpen. Eingriffe in den Betrieb dieser Anlagen können verwendet werden, um das bereits bestehende Netz besser zu nutzen. Dadurch würde der weitere Netzausbau minimiert werden. Die Steuereingriffe werden beispielsweise dazu verwendet, Überlastungen von Leitungen des Netzes zu vermeiden.

Allerdings gibt es viele verschiedene Niederspannungsnetze oder Mittelspannungsnetze mit deutlich verschiedenen Kombinationen an Verbraucher, Erzeugern oder Prosumern, sodass eine zentrale Steuervorrichtung zur Steuerung des Versorgungsnetzes, die beispielsweise mehrere Ortsnetze gleichzeitig steuert, schwer oder nur mit unverhältnismäßigem Aufwand zu realisieren ist. Hierzu wäre eine verlässliche, prohibitiv teure, Echtzeitkommunikationsanbindung aller Netze an die zentrale Steuervorrichtung erforderlich.

Auch eine durchgehend verlässlich korrekte Parametrierung für ein Model einer jeden Ortsnetzstation ist sehr schwer zu realisieren.

Weiterhin sind typischerweise nicht für alle Zustandsgrößen des Netzes zugehörige Messungen verfügbar.

Zusammenfassend werden durch die genannten technischen Schwierigkeiten Niederspannungsnetze bisher nicht automatisiert betrieben.

Der vorliegenden Erfindung liegt die Aufgabe zugrunde, eine verbesserte Steuerung für ein Versorgungsnetz, insbesondere ein Niederspannungsnetz oder ein Mittelspannungsnetz, bereitzustellen.

Die Aufgabe wird durch ein Verfahren mit den Merkmalen des unabhängigen Patentanspruches 1, durch ein künstliches neuronales Netz mit den Merkmalen des unabhängigen Patentanspruches 14, sowie durch eine Steuervorrichtung mit den Merkmalen des unabhängigen Patenanspruches 15 gelöst. In den abhängigen Patentansprüchen sind vorteilhafte Ausgestaltungen und Weiterbildungen der Erfindung angegeben.

Das erfindungsgemäße Verfahren zum bestärkten Lernen eines künstlichen neuronalen Netzes, wobei das neuronale Netz aus mit einem Versorgungsnetz, insbesondere mit einem Stromnetz, assoziierten Messwerten mehrere Steuerungswerte zur Steuerung des Versorgungsnetzes ermittelt, ist gekennzeichnet durch wenigstens die folgenden Schritte:

- Ermitteln eines Steuerungswertes derart, dass wenigstens ein Grenzwert einer Messgröße des Versorgungsnetzes in einem Zeitbereich verletzt wird, insbesondere überschritten oder unterschritten wird, wobei der Zeitbereich derart festgelegt wird, dass Schutzvorrichtungen des Versorgungsnetzes nicht auslösen;
- Erfassen wenigstens eines mit dem Steuerungswert assoziierten Messwertes; und
- Trainieren des neuronalen Netzes mittels des berechneten Steuerungswertes und des erfassten zugehörigen Messwertes.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Insbesondere wird das erfindungsgemäße Verfahren und/oder einer seiner Ausgestaltung mittels einer Recheneinheit durchgeführt.

Das künstliche neuronale Netz ist, insbesondere durch das Training, zur Steuerung des Versorgungsnetzes ausgebildet.

Eine Messgröße des Versorgungsnetzes ist typischerweise eine Zustandsgröße des Versorgungsnetzes, beispielsweise eine Wirkleistung und/oder eine Blindleistung. Im Weiteren wird der Begriff Leistung abkürzend für eine Wirkleistung und/oder eine Blindleistung, insbesondere ebenfalls für eine Scheinleistung (Wirkleistung und Blindleistung), verwendet. Es werden eine oder mehrere Zustandsgrößen des Versorgungsnetzes gemessen, das heißt erfasst.

Das künstliche neuronale Netz, welches zur Steuerung des Versorgungsnetzes ausgebildet ist, wird mittels selbstverstärkten beziehungsweise bestärkten Lernens (englisch: Reinforcement Learning) während des Betriebes des Versorgungsnetzes trainiert. Dadurch lernt das künstliche neuronale Netz während des Betriebes selbstständig. Das künstliche neuronale Netz kann vor dem erfindungsgemäßen Training bereits vortrainiert oder untrainiert sein. Das künstliche neuronale Netz passt sich autonom während des Betriebes des Versorgungsnetzes an und erlernt sinnbildlich verbesserte Strategien für den Betrieb des Versorgungsnetzes (verbesserte Betriebsstrategien). Durch das erfindungsgemäß trainierte neuronale Netz wird somit eine verbesserte Steuerung des Versorgungsnetzes bereitgestellt beziehungsweise eine solche Steuerung erst ermöglicht.

Hierzu ermittelt das künstliche neuronale Netz einen oder mehrere Steuerungswerte (Steuerungsbefehle), beispielsweise Spannungsänderungen und/oder Leistungsänderungen an Knoten und/oder Leitungen des Versorgungsnetzes, die der Steuerung des Versorgungsnetzes zugrunde liegen.

Der beziehungsweise die ermittelten Steuerungswerte können bevorzugt basierend auf einer Belohnungsfunktion für bestärktes Lernen ermittelt werden.

Die Belohnungsfunktion liegt dem bestärkten Lernen des neuronalen Netzes zugrunde. Sie legt fest, welche Eingriffe, beispielsweise Änderungen von Spannungen und/oder Leistungen, vorteilhaft für die Steuerung des Versorgungsnetzes sind. Mit anderen Worten wird das neuronale Netz während des Betriebes und somit während seines Lernens derart trainiert, dass es sinnbildlich seine Belohnung, die es für bestimmte Eingriffe unter bestimmten Umständen gemäß der Belohnungsfunktion erhält, möglichst maximiert. Beispielsweise wird ein Eingriff stets als negativ quantifiziert, sodass die Belohnungsfunktion Strafterme für Eingriffe in den Betrieb des Versorgungsnetzes, beispielsweise durch Änderungen der Spannungen und/oder Leistungen, aufweist. Je größer die Änderung der mit dem Versorgungsnetz assoziierten Steuergröße desto weniger die Belohnung. Das derart trainierte neuronale Netz steuert das Versorgungsnetz somit durch möglichst wenige Eingriffe mit einer möglichst geringen Änderung des bestehenden Netzzustandes.

Weiterhin kann die Belohnungsfunktion Strafterme für ein Überschreiten oder Unterschreiten von Grenzwerten, das heißt für Grenzwertverletzungen, umfassen. Dadurch wird das neuronale Netz derart trainiert, dass solche Überschreitungen und/oder Unterschreitungen von Grenzwerten, beispielsweise maximalen Spannungen, Strömen und/oder Leistungen, möglichst nicht erfolgen.

Die Belohnungsfunktion umfasst somit einen oder mehrere Strafterme, die ein technisch nicht erwünschtes Steuerungsverhalten sanktionieren. Die Strafterme der Belohnungsfunktion können je nach Anforderung verschieden gewichtet werden. Diese Gewichtung kann sich mit dem Fortschritt des Lernens des neuronalen Netzes verändern beziehungsweise neu eingestellt werden.

Ein Grundgedanke des erfindungsgemäßen Verfahrens ist es, das Training des neuronalen Netzes und somit die Steuerung des Versorgungsnetzes durch gezielte Eingriffe zu verbessern. Hierzu werden Steuerungswerte beziehungsweise Steuerungsbefehle erzeugt, die zu einem Überschreiten oder Unterschreiten eines Grenzwertes des Versorgungsnetzes, das heißt zu einer oder mehreren Grenzwertverletzungen, führen. Mit anderen Worten werden synthetische Steuerungsbefehle erzeugt, die allerdings zu tatsächlichen Eingriffen in den Betrieb des Versorgungsnetzes führen.

Erfindungsgemäß wird der Grenzwert lediglich innerhalb eines festgelegten Zeitbereiches überschritten beziehungsweise unterschritten. Hierbei wird der Zeitbereich erfindungsgemäß derart festgelegt, dass Schutzvorrichtungen des Versorgungsnetzes nicht auslösen. Dadurch kann das Versorgungsnetz während des Lernens des neuronalen Netzes weiter regulär betrieben werden.

Mit anderen Worten wird der Zeitbereich bezüglich der Schutzvorrichtungen derart kurz festgelegt, dass diese auslösungsfrei bleiben. Die Länge des Zeitbereiches kann von den vorhandenen Schutzvorrichtungen abhängen und ist so festzulegen, dass diese auslösungsfrei bleiben. Allerdings können trotz der genannten zeitlichen Kürze der Eingriffe Messwerte von mit dem Versorgungsnetz assoziierten Größen, insbesondere Spannungen, Ströme und/oder Leistungen, die wenigstens teilweise auf den sozusagen künstlich erzeugten Eingriffen basieren, erfasst werden, beispielsweise unmittelbar nachdem der oder die Eingriffe erfolgten. Dadurch wird das Versorgungsnetz sinnbildlich getestet und seine Reaktion auf den in diesem Sinne für das Training des neuronalen Netzes vorgesehenen künstlich erzeugten Eingriff erfasst. Dadurch sind für das Training des neuronalen Netzes nicht nur mehr Messwerte beziehungsweise Messdaten verfügbar, sondern zeitgleich werden Randbereiche der Steuerung, das heißt in der Nähe von Grenzwerten, untersucht. Mit anderen Worten wird dadurch die Belohnungsfunktion in ihren Randbereichen gesampelt/exploriert (englisch: sampling/exploration). Das derart trainierte neuronale Netz weist somit insbesondere in den genannten Randbereichen eine verbesserte Steuerung auf, sodass insgesamt eine verbesserte Steuerung des Versorgungsnetzes, ebenfalls in kritischen Situationen nahe einer Grenzwertverletzung, ermöglicht wird.

Das erfindungsgemäße Training des künstlichen neuronalen Netzes führt somit technisch zu einer verbesserten Steuerung des Versorgungsnetzes, wobei die Steuerung mittels des derart trainierten neuronalen Netzes erfolgt. Für die Steuerung ermittelt das neuronale Netz einen oder mehrere Steuerungswerte beziehungsweise Steuerungsbefehle, die einer Änderung einer oder mehrerer mit dem Versorgungsnetz assoziierten technischen Größen, beispielsweise Spannungen und/oder einer oder mehreren Leistungen, an einem oder mehreren Netzknoten oder innerhalb von einer oder mehreren Leitungen des Versorgungsnetzes zugrunde liegen. Das Ermitteln der Steuerungswerte basiert wenigstens auf einen oder mehreren aktuellen Messwerten, die als Eingang für das neuronale Netz verwendet werden.

Der Ausgang des neuronalen Netzes wird durch die Steuerungswerte ausgebildet.

Bevorzugt ist das Versorgungsnetz als Stromnetz ausgebildet. Besonders bevorzugt ist das Versorgungsnetz als Mittelspannnungsnetz und/oder als Niederspannungsnetz ausgebildet.

Das vorliegende Verfahren ist besonders für Mittelspannungsnetze und/oder Niederspannungsnetze von Vorteil, da für diese Netze typischerweise wenig Messwerte/Messdaten vorliegen. Durch das erfindungsgemäße Training des neuronalen Netzes, welches auf synthetisch erzeugten Eingriffen basiert und während des Betriebes des Stromnetzes erfolgt, können mehr Messwerte/Messdaten bereitgestellt werden. Dadurch ist ein kostenintensiver Ausbau von Mittelspannungsnetzen oder Niederspannungsnetzen, insbesondere im Hinblick auf Messeinrichtungen, nicht erforderlich oder dieser wird deutlich reduziert. Das neuronale Netz, das zur Steuerung des Mittel- oder Niederspannungsnetzes vorgesehen und ausgebildet ist, schafft sich sinnbildlich seine Messwerte/Messdaten durch die gezielten synthetisch erzeugten Eingriffe selbst und kann dadurch stetig während des Betriebes des Stromnetzes weiter lernen.

Das erfindungsgemäße künstliche neuronale Netz zur Steuerung eines Versorgungsnetzes, insbesondere eines Stromnetzes, ist dadurch gekennzeichnet, dass dieses gemäß einem Verfahren der vorliegenden Erfindung und/oder einer ihrer Ausgestaltungen trainiert ist.

Hierbei wird insbesondere ein bestärktes Lernen (englisch: Reinforcement Learning) verwendet.

Es ergeben sich zum erfindungsgemäßen Verfahren gleichartige und gleichwertige Vorteile und/oder Ausgestaltungen.

Die erfindungsgemäße Steuervorrichtung zur Steuerung eines Versorgungsnetzes, insbesondere eines Stromnetzes, ist dadurch gekennzeichnet, dass diese ein künstliches neuronales Netz gemäß der vorliegenden Erfindung und/oder einer ihrer Ausgestaltungen umfasst.

Insbesondere umfasst die Steuervorrichtung eine Recheneinheit mittels welcher das künstliche neuronale Netz implementiert ist.

Es ergeben sich zum erfindungsgemäßen Verfahren gleichartige und gleichwertige Vorteile und/oder Ausgestaltungen.

Gemäß einer bevorzugten Ausgestaltung der Erfindung erfolgt das Lernen während des Betriebes des Versorgungsnetzes.

Dadurch ist ein Unterbrechen des Betriebes des Versorgungsnetzes nicht erforderlich. Dies ist deshalb möglich, da die synthetisch erzeugten Eingriffe derart erzeugt werden, dass durch diese Schutzvorrichtungen des Versorgungsnetzes nicht ausgelöst werden. Weiterhin wird dadurch das derart trainierte neuronale Netz stetig besser bezüglich der Steuerung des Versorgungsnetzes, insbesondere im Hinblick auf kritische Situationen, die durch ein Überschreiten oder Unterschreiten von Grenzwerten des Versorgungsnetzes gekennzeichnet sind.

In einer vorteilhaften Weiterbildung der Erfindung ist der Zeitbereich kleiner oder gleich einer Minute.

Mit anderen Worten wird der Zeitbereich kleiner oder gleich einer Minute festgelegt. Dadurch ist insbesondere für Mittelspannungsnetze und/oder Niederspannungsnetze sichergestellt, dass bekannte und installierte Schutzvorrichtungen, beispielsweise Sicherungen, nicht auslösen, das heißt auslösungsfrei bleiben.

Gemäß einer vorteilhaften Ausgestaltung der Erfindung werden Überschreitungen von Grenzwerten in Güteparametern des bestärkten Lernens berücksichtigt.

Mit anderen Worten kann festgehalten werden, wie häufig die ermittelten Eingriffe (Steuerungswerte/Steuerungsbefehle) des neuronalen Netzes zu Überschreitungen von Grenzwerten führen. Dies kann als Güteparameter, das heißt als Parameter, der die Qualität des trainierten neuronalen Netzes erfasst, herangezogen werden. Grundsätzlich sollten keine Überschreitungen von Grenzwerten durch das Steuern mittels des neuronalen Netzes erfolgen. Ein Überschreiten ist jedoch nicht grundsätzlich ausgeschlossen, sodass ein neuronales Netz in diesem Sinne besser trainiert ist, wenn dieses im Betrieb durch seine Eingriffe zu weniger Grenzwertverletzungen führt. Als Güteparameter kann die Anzahl der Grenzwertüberschreitungen innerhalb eines Zeitbereiches und/oder die Größe der Grenzwertüberschreitungen, das heißt die Größe der Abweichung vom Grenzwert herangezogen werden. Für einen derart festgelegten Güteparameter kann ein Schwellenwert festgelegt werden. Wird der Schwellenwert überschritten, beispielsweise erfolgten zu viele Grenzwertüberschreitungen, so kann das Training des neuronalen Netzes verworfen werden und das neuronale Netz neu gemäß der vorliegenden Erfindung und/oder einer ihrer Ausgestaltungen trainiert beziehungsweise angelernt werden. Mit anderen Worten wird das Reinforcement-Modell verworfen und neu trainiert.

Besonders bevorzugt werden vermiedene Verletzungen, insbesondere Überschreitungen, von Grenzwerten als Güteparameter des bestärkten Lernens verwendet werden.

In einer vorteilhaften Weiterbildung der Erfindung werden als Messwerte Wirkleistungen, Blindleistungen, Winkel und/oder Ströme der jeweiligen Phase an den jeweiligen Netzknoten des Stromnetzes und/oder in den jeweiligen Leitungen des Stromnetzes verwendet.

Dadurch werden vorteilhafterweise für ein Stromnetz technisch zugängliche und erfassbare Messgrößen für das Training beziehungsweise für das Lernen des neuronalen Netzes und für die Steuerung des Stromnetzes verwendet.

Gemäß einer vorteilhaften Ausgestaltung der Erfindung werden aufgrund der Steuerungswerte Änderungen von Wirkleistungen und/oder Blindleistungen in das Stromnetz eingespeist und/oder ausgespeist.

Hierbei können bevorzugt die durch das neuronale Netz ermittelten Steuerungswerte den vorgesehenen Änderungen von Leistungen entsprechen. Mit anderen Worten werden die ermittelten Änderungen der Leistungen an die jeweiligen Anlagen, die an das Stromnetz angeschlossen sind und eine Leistung ein- oder ausspeisen können, weitergegeben, die dann diese Änderung bezüglich ihrer Leistung ausführen. Dadurch werden durch das neuronale Netz Einspeisungen in das Stromnetz und/oder Ausspeisungen aus dem Stromnetz gesteuert.

In einer vorteilhaften Weiterbildung der Erfindung werden die Steuerungswerte beziehungsweise Steuerungsbefehle mittels eines Rundsteuersignals und/oder Fernwirksignals an ein Smartmeter und/oder an einen regelbaren Netztransformator und/oder an Umrichter von Photovoltaikanlagen und/oder an Ladesäulen übermittelt.

Dadurch wird vorteilhafterweise eine Steuerung mittels typischer Netzanlagen ermöglicht. Mittels eines regelbaren Netztransformators, insbesondere mittels eines regelbaren Ortsnetztransformators, können ebenfalls Spannungen geregelt beziehungsweise gesteuert werden, sodass dadurch Spannungsanhebungen und/oder Spannungssenkungen ebenfalls möglich sind.

Gemäß einer vorteilhaften Ausgestaltung der Erfindung wird als Belohnungsfunktion

$$r(s_t) = -\alpha_P |\Delta P|^2 - \alpha_Q |\Delta Q|^2 - \sum_k \gamma_k \max(0, G_k - G_k^{\max})$$

verwendet, wobei $\boldsymbol{G_k}$ eine Messgröße und $G_k^{\max}$ ihren zughörigen Grenzwert, $\Delta\boldsymbol{P}$ eine Änderung der Wirkleistung, $\Delta\boldsymbol{Q}$ eine Änderung der Blindleistung und $\boldsymbol{s_t = (P_{1,t}, P_{2,t},..., P_{N,t}, Q_{1,t}, Q_{2,t},...,Q_{N,t})^T}$ einen Zustand des Stromnetzes zum Zeitpunkt t kennzeichnet.

Der Zustand des Stromnetzes wird somit vorliegend bevorzugt durch die Leistungen ausgebildet. Typischerweise wird der Zustand durch Spannungsbeträge und Winkel ausgebildet. Mit anderen Worten sind vorliegend die Leistungen als Zustandsgröße vorteilhaft. Eine Leistung $\boldsymbol{P_{i,t}}$ beziehungsweise $\boldsymbol{Q_{i,t}}$ kennzeichnet die Wirk- beziehungsweise Blindleistung an einem Netzknoten $\boldsymbol{i}$ zum Zeitpunkt beziehungsweise innerhalb des Zeitschrittes $t$. Vorliegend weist das Stromnetz $\boldsymbol{N}$ Netzknoten auf. An jedem der Netzknoten ist eine Änderung der Wirkleistung und/oder Blindleistung möglich. Die gesamten Änderungen der Wirkleistung oder Blindleistung ist durch $\Delta\boldsymbol{P}$ beziehungsweise $\Delta\boldsymbol{Q}$ symbolisiert. Jeder Eingriff und somit jede Änderung ist grundsätzlich technisch unerwünscht, sodass die zu diesen Änderungen zughörigen Strafterme innerhalb der Belohnungsfunktion ein negatives Vorzeichen aufweisen. Die Änderung der Wirkleistungen und die Änderung der Blindleistungen weisen grundsätzlich verschiedene Parameter $\alpha_{\boldsymbol{P}}$ beziehungsweise $\alpha_{\boldsymbol{Q}}$ auf. Mit anderen Worten werden diese innerhalb der Belohnungsfunktion verschieden gewichtet. Weiterhin werden Grenzwertverletzungen, insbesondere im Hinblick auf eine maximal zulässige Spannung $G_{1,i} = V_i^{\max}$ und/oder einen maximal zulässigen $G_{2,l} = I_l^{\max}$ Strom, durch den letzten Term der Belohnungsfunktion sanktioniert, das heißt diese führen ebenfalls sinnbildlich zu einer geringen Belohnung. Jeder dieser Grenzwertterme weist wiederum einen Gewichtungsparameter $\gamma_{\boldsymbol{k}}$ auf. Die Funktion $\max(0, G_k - G_k^{\max})$ kann ebenfalls als $\mathrm{relu}(G_k - G_k^{\max})$, das heißt als Gleichrichter (englisch: Rectifier) bezeichnet werden.

Weiterhin ist es besonders bevorzugt, wenn $\alpha_{\boldsymbol{P}}, \alpha_{\boldsymbol{Q}} \ll \gamma_{k=V,I}$ ist. Das ist deshalb von Vorteil, da dadurch Grenzwertverletzungen deutlich stärker sanktioniert werden als Eingriffe, die zu einer Änderung der Leistungen innerhalb der jeweiligen Grenzwerte führen. Mit anderen Worten ist die Strafe für eine Grenzwertverletzung größer als für ein Steuern innerhalb der Grenzwerte.

Zudem können Grenzwertunterschreitungen, beispielsweise für die Spannung, die innerhalb eines Spannungsbandes, welches durch einen minimalen und maximalen Spannungsgrenzwert begrenzt ist, sanktioniert werden. Mit anderen Worten sollte während des Betriebes $V_i^{\min} \leq |V_{i,t}| \leq V_i^{\max}$ für die Netzknoten sowie $|I_{l,t}| \leq I_l^{\max}$ für die Leitungen erfüllt sein. Dies kann durch entsprechende Strafterme innerhalb der Belohnungsfunktion berücksichtigt werden.

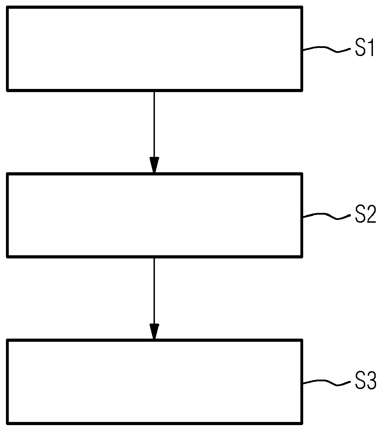

Wird somit mit $\boldsymbol{a_t = (\Delta P_{1,t} ..., \Delta P_{F,t}, \Delta Q_{1,t} ..., \Delta Q_{F,t})^T}$ ein Eingriff gekennzeichnet, das heißt eine Änderung der Wirkleistung $\Delta\boldsymbol{P_{i,t}}$ und der Blindleistung $\Delta\boldsymbol{Q_{i,t}}$ zum Zeitpunkt $t$ am Netzknoten $\boldsymbol{i}$, wobei $F$ die Gesamtzahl der Einspeisungen/Ausspeisungen bezeichnet, so kann das neuronale Netz als eine Abbildung $f: z_t^{(m)} \to a_t^*$ verstanden werden. Gemäß der Abbildung $f$ (englisch: Policy-Function) ermittelt das gemäß der vorliegenden Erfindung und/oder einer ihrer Ausgestaltungen trainierte neuronale Netz aus einem allgemeinen gemessenen Zustand $z_t^{(m)} = \left( P_{1,t}, P_{2,t}, \dots, Q_{1,t}, \dots, |V_{1,t}|, \dots \varphi_{V,1,t}, \dots, |I_{1,t}|, \dots \varphi_{I,1,t}, \dots \right)^T$ einen möglichst optimalen Eingriff $a_t^*$. Der Eingriff $a_t^*$ wird hierbei derart ermittelt, dass die Belohnungsfunktion möglichst maximiert wird, besonders bevorzugt den Wert Null aufweist. Dies wird durch das Training des neuronalen Netzes erreicht. Alternativ oder ergänzend können weitere Verfahren zum bestärkten Lernen, beispielsweise Actor-Critic-Verfahren, verwendet werden.

Die Daten $z_t^{(m)}$, $a_t^*$ können während des Betriebes des Versorgungsnetzes erfasst beziehungsweise ermittelt und gespeichert werden.

In einer vorteilhaften Weiterbildung der Erfindung erfolgt das Lernen derart, dass die Belohnungsfunktion $r(s_t)$ maximiert wird.

Mit anderen Worten werden vorteilhafterweise Grenzwertverletzungen sowie grundsätzlich Eingriffe in den Betrieb des Stromnetzes sanktioniert. Durch diese Sanktionierung in der Belohnungsfunktion wird technisch erreicht, dass möglichst wenige Eingriffe sowie möglichst wenige Grenzwertverletzungen während des Betriebes des Stromnetzes erfolgen. Hierbei werden bevorzugt Grenzwertverletzungen stärker als regelnde beziehungsweise steuernde Eingriffe innerhalb der Belohnungsfunktion gewichtet.

Gemäß einer vorteilhaften Ausgestaltung der Erfindung ermittelt das neuronale Netz den Vektor $a_t = (\Delta P_{1,t} \dots, \Delta P_{F,t}, \Delta Q_{1,t} \dots, \Delta Q_{F,t})^T$ als Steuerungswerte.

Mit anderen Worten werden bevorzugt Änderungen der Leistungen als Steuerungswerte beziehungsweise Steuerungsbefehle verwendet. Dadurch wird eine effiziente Steuerung ermöglicht, da für typische Anlagen des Stromnetzes lediglich ihre eingespeiste und/oder ausgespeiste Leistung steuerbar ist. Spannungen und/oder Ströme sind beispielsweise durch einen regelbaren Ortsnetztransformator steuerbar.

In einer vorteilhaften Weiterbildung der Erfindung erfolgt das Lernen zusätzlich mit synthetischen Messwerten, wobei die synthetischen Messwerte mittels einer Zustandsschätzung berechnet werden.

Mit anderen Worten werden durch eine Zustandsschätzung und/oder eine Simulation weitere Daten zum Training des neuronalen Netzes bereitgestellt. Dadurch wird das Training des neuronalen Netzes und somit die Steuerung des Stromnetzes verbessert. Mittels der synthetischen Messwerte kann zudem vorteilhafterweise ermittelt werden, ob ein Grenzwert bei einer bestimmten Situation überschritten werden würde.

Weitere Vorteile, Merkmale und Einzelheiten der Erfindung ergeben sich aus den im Folgenden beschriebenen Ausführungsbeispielen sowie anhand der Zeichnung. Dabei zeigt die einzige Figur schematisiert ein Ablaufdiagramm eines Verfahrens gemäß einer Ausgestaltung der vorliegenden Erfindung.

Gleichartige, gleichwertige oder gleichwirkende Elemente können in der Figur mit denselben Bezugszeichen versehen sein.

Gemäß dem vorliegenden Ausführungsbeispiel ist das Versorgungsnetz ein Stromnetz, insbesondere ein Mittelspannungsnetz und/oder Niederspannungsnetz, beispielsweise ein Ortsnetz.

Bei dem Verfahren zum bestärkten Lernen eines künstlichen neuronalen Netzes werden aus mehreren mit einem Stromnetz assoziierten Messwerten mehrere Steuerungswerte beziehungsweise Steuerungsbefehle zur Steuerung des Stromnetzes durch das neuronale Netz ermittelt. Zu den Messwerten sind technische Messgrößen des Stromnetzes zugehörig, insbesondere Leistungen, Spannungen, Spannungsbeträge, Zweigströme, Zweigstrombeträge und/oder Spannungswinkel und/oder Zweigstromwinkel. Die Gesamtheit an verwendeten Messgrößen beziehungsweise ihrer zugehörigen Messwerte kann als (erweiterter) Zustand des Stromnetzes bezeichnet werden. Das neuronale Netz ist zur Steuerung des Stromnetzes basierend auf den erfassten Messwerten ausgebildet.

Für Mittelspannungsnetze beziehungsweise Niederspannungsnetze sind typischerweise vergleichsweise wenig Messwerte verfügbar. Mit anderen Worten wird typischerweise lediglich eine Teilmenge der genannten Zustandsgrößen (Messgrößen) erfasst beziehungsweise gemessen, das heißt es gilt $z_t^{(m)} = C_m z_t$. Hierbei repräsentiert die (Projektions-)Matrix $C_m$ mit einer 1 in der entsprechenden Zeile den Anschluss einer Messung.

Basierend auf den erfassten Zustandsgrößen $z_t^{(m)}$ ermittelt das trainierte neuronale Netz grundsätzlich einen oder mehrere Eingriffe $a_t^*$, das heißt einen oder mehrere Steuerungswerte zur Steuerung des Stromnetzes. Das neuronale Netz beziehungswese dessen Wirkung oder Steuerung kann somit grundsätzlich als Abbildung

$$f: z_t^{(m)} \rightarrow a_t^*$$
verstanden werden.

Gemäß einem ersten Schritt S1 des Verfahrens zum Trainieren einen solchen, wie obenstehend beschriebenen, künstlichen neuronalen Netzes werden somit Steuerungswerte basierend auf einer Belohnungsfunktion durch das neuronale Netz berechnet beziehungsweise ermittelt. Die Belohnungsfunktion liegt dem bestärkten Lernen des neuronalen Netzes zugrunde. Das neuronale Netz wird mit der Belohnungsfunktion derart trainiert, dass bezüglich der Belohnungsfunktion optimale Eingriffe approximiert werden.

Weiterhin wird der Steuerungswert derart erzeugt, dass wenigstens ein Grenzwert einer Messgröße des Stromnetzes für diesen Steuerungswert in einem Zeitbereich überschritten oder unterschritten wird. Der Zeitbereich wird hierbei derart festgelegt, dass Schutzvorrichtungen des Stromnetzes, beispielsweise Sicherungen, nicht auslösen, das heißt auslösungsfrei verbleiben, obwohl der Grenzwert kurzfristig überschritten beziehungsweise unterschritten, das heißt verletzt wird. Mit anderen Worten werden zum Training des neuronalen Netzes künstliche Steuerungswerte an die Anlagen des Stromnetzes übermittelt, die zu einer kurzfristigen Verletzung eines oder mehrerer Grenzwerte führen. Aufgrund der Kurzfristigkeit dieser künstlichen Eingriffe lösen die Schutzvorrichtungen nicht aus, sodass der Betrieb des Stromnetzes durch diese nicht gestört wird. Die derartigen grenzwertverletzenden Eingriffe erfolgen somit bevorzugt während des Betriebes des Stromnetzes. Das neuronale Netz lernt somit während des Betriebes des Stromnetzes. Die Grenzwerte sind insbesondere Spannungsgrenzwerte, Stromgrenzwerte und/oder Leistungsgrenzwerte. Es können Grenzwertüberschreitungen und/oder Grenzwertunterschreitungen im oben genannten Sinne durch das Training des neuronalen Netzes ausgelöst werden.

In einem zweiten Schritt S2 des Verfahrens werden nach dem Eingriff, der zur Grenzwertverletzung führte, mehrere Messwerte der Messgrößen erfasst. Mit anderen Worten ist dadurch dem Eingriff, der zur Grenzwertverletzung führte, wenigstens ein Messwert zugeordnet. Dadurch ist der Steuerungswert mit dem Messwert assoziiert. Diese bilden ein Tupel $\left( z_t^{(m)}, \ a_t^* \right)$ welches zum Training des neuronalen Netzes herangezogen wird.

Dadurch werden nicht nur mehr Trainingsdaten (Tupel) für das neuronale Netz bereitgestellt, sondern weiterhin das neuronale Netz in den kritischen Grenzbereichen des Stromnetzes trainiert. Dadurch wird das Training des neuronalen Netzes und somit die Steuerung des Stromnetzes durch das neuronale Netz verbessert.

Gemäß einem dritten Schritt S3 des Verfahrens wird schließlich das neuronale Netz mittels des berechneten Steuerungswertes und des erfassten zugehörigen Messwertes trainiert. Hierzu können die Daten $\left( z_t^{(m)}, \ a_t^* \right)$ ebenfalls gespeichert werden.

Fehlt eine Messung oder kann ein Messwert zu einer Messgröße nicht erfasst werden, so können Schätzungen verwendet werden. Dies kann mittels einer Simulation und/oder einer Zustandsschätzung erfolgen.

Das beschriebene Vorgehen zum Trainieren des neuronalen Netzes kann somit ebenfalls als ein Austesten des Zustandes bezeichnet werden (englisch: state exploration). Während des Trainings kann ebenfalls die Belohnungsfunktion verändert werden. So könnten anfänglich Grenzwertverletzungen stärker gewichtet werden. Treten diese später seltener auf, kann deren Gewichtung reduziert werden. Dadurch ist eine autonome Anpassung des neuronalen Netzes beziehungsweise des zugrundeliegenden Modells während des Betriebes möglich. Weiterhin könnte ein Modell vollständig verworfen werden und das neuronale Netz neu trainiert werden.

Durch das vorliegende Verfahren zum Trainieren des neuronalen Netzes, welches während des Betriebes des Stromnetzes durchgeführt wird, bildet sich somit ein verbessertes trainiertes neuronales Netz, insbesondere im Hinblick auf kritische Situationen, aus. Das derart trainierte Netz wird zur Steuerung des Stromnetzes verwendet, sodass die Steuerung des Stromnetzes verbessert wird. Insbesondere können Leitungsüberlastungen und Spannungsbandverletzungen vermieden beziehungsweise im Vergleich zu klassischen Regelungen/Steuerungen reduziert werden. Somit wird ein autonomer effizienter Betrieb von Mittel- und/oder Niederspannungsnetzen ermöglicht.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

S1   erster Schritt
S2   zweiter Schritt

S3    dritter Schritt

**Patentansprüche**

1.  Verfahren zum bestärkten Lernen eines künstlichen neuronalen Netzes, wobei das neuronale Netz aus mit einem Versorgungsnetz, insbesondere mit einem Stromnetz, assoziierten Messwerten mehrere Steuerungswerte zur Steuerung des Versorgungsnetzes ermittelt, **gekennzeichnet durch** die Schritte:

    - (S1) Ermitteln eines Steuerungswertes derart, dass wenigstens ein Grenzwert einer Messgröße des Versorgungsnetzes in einem Zeitbereich verletzt wird, wobei der Zeitbereich derart festgelegt wird, dass Schutzvorrichtungen des Versorgungsnetzes nicht auslösen;
    - (S2) Erfassen wenigstens eines mit dem Steuerungswert assoziierten Messwertes; und
    - (S3) Trainieren des neuronalen Netzes mittels des berechneten Steuerungswertes und des erfassten zugehörigen Messwertes.

2.  Verfahren gemäß Anspruch 1, **gekennzeichnet dadurch, dass** das Versorgungsnetz ein Stromnetz ist.

3.  Verfahren gemäß Anspruch 2, **gekennzeichnet dadurch, dass** das Versorgungsnetz als Mittelspannungsnetz und/oder Niederspannungsnetz ausgebildet ist.

4.  Verfahren gemäß einem der vorhergehenden Ansprüche, **gekennzeichnet dadurch, dass** das Lernen während des Betriebes des Versorgungsnetzes erfolgt.

5.  Verfahren gemäß einem der vorhergehenden Ansprüche, **gekennzeichnet dadurch, dass** der Zeitbereich kleiner oder gleich einer Minute ist.

6.  Verfahren gemäß einem der vorhergehenden Ansprüche, **gekennzeichnet dadurch, dass** vermiedene Verletzungen von Grenzwerten als Güteparameter des bestärkten Lernens verwendet werden.

7.  Verfahren gemäß einem der Ansprüche 2 bis 6, **gekennzeichnet dadurch, dass** als Messwerte Wirkleistungen, Blindleistungen, Winkel und/oder Ströme der jeweiligen Phase an jeweiligen Netzknoten des Stromnetzes und/oder in den jeweiligen Leitungen des Stromnetzes verwendet werden.

8.  Verfahren gemäß einem der Ansprüche 2 bis 7, **gekennzeichnet dadurch, dass** aufgrund der Steuerungswerte Änderungen von Wirkleistungen und/oder Blindleistungen in das Stromnetz eingespeist und/oder ausgespeist werden.

9.  Verfahren gemäß Anspruch 8, **gekennzeichnet dadurch, dass** die Steuerungswerte mittels eines Rundsteuersignals und/oder Fernwirksignals an ein Smartmeter und/oder an einen regelbaren Netztransformator und/oder an Umrichter von Photovoltaikanlagen und/oder an Ladesäulen übermittelt werden.

10. Verfahren gemäß einem der Ansprüche 2 bis 9, **gekennzeichnet dadurch, dass** als Belohnungsfunktion

$$r(s_t) = -\alpha_P |\Delta P|^2 - \alpha_Q |\Delta Q|^2 - \sum_k \gamma_k \max(0, G_k - G_k^{\max})$$

verwendet wird, wobei $G_k$ eine Messgröße und $G_k^{\max}$ ihren zughörigen Grenzwert, $\Delta P$ eine Änderung der Wirkleistung, $\Delta Q$ eine Änderung der Blindleistung und $s_t = (P_{1,t}, P_{2,t}, ..., P_{N,t}, Q_{1,t}, Q_{2,t}, ..., Q_{N,t})^T$ einen Zustand des Stromnetzes zum Zeitpunkt t kennzeichnet.

11. Verfahren gemäß Anspruch 10, **gekennzeichnet dadurch, dass** das Lernen derart erfolgt, dass die Belohnungsfunktion $r(s_t)$ maximiert wird.

12. Verfahren gemäß Anspruch 10 oder 11, **gekennzeichnet dadurch, dass** das neuronale Netz den Vektor $a_t =$

$(\Delta P_{1,t}, ..., \Delta P_{F,t}, \Delta Q_{1,t}, ..., \Delta Q_{F,t})^T$ als Steuerungswerte ermittelt.

13. Verfahren gemäß einem der Ansprüche 2 bis 12, **gekennzeichnet dadurch, dass** das Lernen zusätzlich mit synthetischen Messwerten erfolgt, wobei die synthetischen Messwerte mittels einer Zustandsschätzung berechnet werden.

14. Künstliches neuronales Netz zur Steuerung eines Versorgungsnetzes, insbesondere eines Stromnetzes, **dadurch gekennzeichnet, dass** dieses gemäß einem der Ansprüche 1 bis 13 trainiert ist.

15. Steuervorrichtung zur Steuerung eines Versorgungsnetzes, insbesondere eines Stromnetzes, **dadurch gekennzeichnet, dass** diese ein künstliches neuronales Netz gemäß Anspruch 14 umfasst.

S1

S2

S3

**EP 4 106 131 A1**

Europäisches Patentamt
European Patent Office
Office européen des brevets

**EUROPÄISCHER RECHERCHENBERICHT**

Nummer der Anmeldung

EP 21 17 9287

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2020/327411 A1 (SHI DI [US] ET AL) 15. Oktober 2020 (2020-10-15) * Absätze [0004] - [0006], [0031] - [0060]; Abbildungen 1-6 * ----- | 1-15 | INV. H02J3/38 G06N3/02 |
| A | US 2020/119556 A1 (SHI DI [US] ET AL) 16. April 2020 (2020-04-16) * Absätze [0033] - [0065]; Abbildungen 1-4 * ----- | 1-15 | |
| A | CN 111 525 548 A (CHINA ELECTRIC POWER RES INST CO LTD ET AL.) 11. August 2020 (2020-08-11) * Abbildungen 4,6,9 * ----- | 1-15 | |
| A | US 2020/285204 A1 (IWANE HIDENAO [JP] ET AL) 10. September 2020 (2020-09-10) * Absätze [0121] - [0156]; Abbildungen 5-8 * ----- | 1-15 | |
| | | | **RECHERCHIERTE SACHGEBIETE (IPC)** |
| | | | H02J G06N |

Der vorliegende Recherchenbericht wurde für alle Patentansprüche erstellt

| Recherchenort | Abschlußdatum der Recherche | Prüfer |
|---|---|---|
| München | 30. November 2021 | Bergler, Christian |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

.........................................................................................

& : Mitglied der gleichen Patentfamilie, übereinstimmendes
  Dokument

EPO FORM 1503 03.82 (P04C03)

11

**EP 4 106 131 A1**

**ANHANG ZUM EUROPÄISCHEN RECHERCHENBERICHT
ÜBER DIE EUROPÄISCHE PATENTANMELDUNG NR.**

EP 21 17 9287

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-11-2021

| Im Recherchenbericht angeführtes Patentdokument | Datum der Veröffentlichung | Mitglied(er) der Patentfamilie | Datum der Veröffentlichung |
|---|---|---|---|
| US 2020327411 A1 | 15-10-2020 | KEINE | |
| US 2020119556 A1 | 16-04-2020 | KEINE | |
| CN 111525548 A | 11-08-2020 | KEINE | |
| US 2020285204 A1 | 10-09-2020 | JP 2020144483 A<br>US 2020285204 A1 | 10-09-2020<br>10-09-2020 |

EPO FORM P0461

Für nähere Einzelheiten zu diesem Anhang : siehe Amtsblatt des Europäischen Patentamts, Nr.12/82